# EUROPEAN PATENT SPECIFICATION

(11) **EP 1 886 296 B1**
(45) Date of publication and mention of the grant of the patent: **09.12.2009**
(21) Application number: 06747441.1
(22) Date of filing: 18.05.2006
(51) Int. Cl.: G08G 1/09

(54) **PROVIDING TRAFFIC INFORMATION COMPRISING SUB-LINK INFORMATION OF LINKS**
BEREITSTELLUNG VON VERKEHRSINFORMATIONEN, EINSCHLIESSLICH TEILVERBINDUNGEN VON VERBINDUNGEN
FOURNITURE D'INFORMATION DE TRAFIC COMPRENANT DES SOUS LIAISONS DE LIAISONS

(30) Priority: 18.05.2005 US 681971 P; 21.10.2005 KR 20050099532
(43) Date of publication of application: 13.02.2008
(60) Divisional application: 09170339.7
(73) Proprietor: LG Electronics, Inc., Seoul 150-010 (KR)
(72) Inventor: JUNG, Mun Ho, Seongnam-si Gyeonggi-do 463-753 (KR); JOE, Moon Jeung, Dongan-gu Anyang-si Gyeonggi-do 431-776 (KR); YI, Dong Hoon, Seongbuk-gu, Seoul 136-770 (KR)
(74) Representative: Cabinet Plasseraud
(86) International application number: PCT/KR2006/001860
(87) International publication number: WO 2006/123903

(56) References cited:
- EP-A- 1 041 755
- EP-A- 1 445 750
- WO-A-01/06478
- DE-A1- 10 101 349
- JP-A- 11 160 081
- KR-A- 19990 025 959
- US-B1- 6 741 932

## Description

### 1. TECHNICAL FIELD

The present document relates to providing traffic information including sub-links of link and using the provided traffic information.

### 2. BACKGROUND ART

With the advancement in digital signal processing and communication technologies, radio and TV broadcasts are being digitalized. Digital broadcasting enables provision of various information (e.g., news, stock prices, weather, traffic information, etc.) as well as audio and video content.

European patent application publication EP 1 445 750 relates to a method of transmitting traffic related information by using basic and extension messages.

### 3. DISCLOSURE OF INVENTION

The invention is defined in the independent claims as appended.

In one general aspect, a method for identifying traffic information for at least one sub-link is provided. The method includes receiving traffic information including a sub-link identifier enabling a determination of whether the received traffic information includes sub-link information, information identifying a link within which the sub-link is located, and sub-link location information enabling a determination of a portion of the link that corresponds to the sub-link. The method also includes determining, based on the sub-link identifier whether the received traffic information includes sub-link information and determining sub-link characteristics only if the sub-link identifier enables a determination that the received traffic information includes sub-link information.

Implementations may include one or more additional features. For instance, the method may include receiving traffic status information enabling a determination of traffic information for a sub-link. Determining the sub-link characteristics may include associating the received traffic status information as sub-link traffic status information for the sub-link, and enabling perception of an association between the sub-link and the link, and an association between the received traffic status information and the sub-link.

In the method, receiving traffic information may include receiving a data length associated with the traffic information, a text name or description of the sub-link, and a start and end location of the sub-link. Receiving sub-link location information may include receiving vertex, coordinate, or longitude and latitude information that corresponds to a location associated with the sub-link. Receiving sub-link location information may include receiving vertex, coordinate, or longitude and latitude information that corresponds to the link.

Also, in the method, after the sub-link is determined to be within the link, additional sub-link information to enable deletion of the sub-link may be received. The sub-link may, only if the received additional sub-link information includes an identifier that enables a determination that the sub-link is to be deleted, be deleted. The received additional sub-link information may specify the sub-link identifier and the identifier of the link.

The method may further include receiving additional sub-link information after the sub-link is determined to be within the link, and using the received additional sub-link information to alter the position of the determined sub-link within the link. The received additional sub-link information may include at least one of a start location and an end location of the determined sub-link. The received additional sub-link information may be used to extend or shorten a length of the sub-link. Additional sub-link information may be received after the sub-link is determined to be within the link, and the received additional sub-link information may be used to alter the position of the determined sub-link beyond location constraints associated with the link.

Also, the method may further include receiving information corresponding to a message management structure including information corresponding to a generation time of the information included in the message management structure. The generation time included within the received message management structure may relate to status information for the sub-link. The generation time included within the received message management structure may relate to a plurality of message component structures that correspond to more than one of a predicted or current traffic tendency, a predicted or current amount of traffic, a predicted or current speed, and a predicted.or current time to traverse a particular link. Receiving information reflecting a message component structure may include receiving information associated with identification and configuration of the sub-link.

Further in the method, traffic status information for the sub-link may include information associated with at least one of a predicted or current travel speed on the sub-link, a predicted or current congestion level or amount on the sub-link, a predicted or current travel time to traverse the sub-link, or a predicted or current speed of travel on the sub-link. The traffic status information for the sub-link may differ from traffic status information for the link. The traffic status information for the sub-link may be received after receiving traffic status information that is configured to reveal status for the link, the sub-link status information being configured to enable updated status information for a portion of the link corresponding to the sub-link. Receiving sub-link information may include receiving a text descriptor associated with the sub-link.

In another general aspect, a traffic information communication device is provided. The device includes a data receiving interface configured to receive traffic information including a sub-link identifier enabling a determination of whether the received traffic information includes sub-link information. The device is also configured to receive information identifying a link within which the sub-link is located, and sub-link location information enabling a determination of a portion of the link that corresponds to the sub-link. The device also includes a processing device configured to process the traffic information received from the data receiving interface and to determine sub-link characteristics based at least in part on the traffic information received.

Implementations may include one or more additional features. For instance, the data receiving interface may receive additional sub-link information after the sub-link is determined to be within the link, and the processing device may be configured to use the received additional sub-link information to alter the position of the determined sub-link within the link. The received additional sub-link information may include at least one of a start location and an end location of the determined sub-link. The processing device may be configured to use the received additional sub-link information to extend or shorten a length of the sub-link. The data receiving interface may receive additional sub-link information after the sub-link is determined to be within the link, and the processing device may be configured to use the received additional sub-link information to alter the position of the determined sub-link beyond location constraints associated with the link.

In a further general aspect, an apparatus for identifying traffic information for at least one sub-link is provided. The apparatus includes means for receiving traffic information including a sub-link identifier enabling a determination of whether the received traffic information includes sub-link information, information identifying a link within which the sub-link is located, and sub-link location information enabling a determination of a portion of the link that corresponds to the sub-link. The apparatus also includes means for determining, based on the sub-link identifier whether the received traffic information includes sub-link information and means for determining sub-link characteristics only if the sub-link identifier enables a determination that the received traffic information includes sub-link information.

Implementations may include one or more additional features. For instance, in the apparatus, traffic status information enabling a determination of traffic information for a sub-link may be received. Determining sub-link characteristics may include associating the received traffic status information as sub-link traffic status information for the sub-link, and enabling perception of an association between the sub-link and the link, and an association between the received traffic status information and the sub-link. The means for receiving may include means for receiving additional sub-link information after the sub-link is determined to be within the link, the apparatus further comprising means for using the received additional sub-link information to alter the position of the determined sub-link within the link.

The method may also include means for using the received additional sub-link information to extend or shorten a length of the sub-link. The means for receiving may include means for receiving additional sub-link information after the sub-link is determined to be within the link, the apparatus may further include means for using the received additional sub-link information to alter the position of the determined sub-link beyond location constraints associated with the link.

The details of one or more implementations are set forth in the accompanying drawings and the description below. Other features will be apparent from the description and drawings, and from the claims.

### 4. BRIEF DESCRIPTION OF DRAWINGS

The accompanying drawings illustrate various implementations. In the drawings:
FIG. 1 illustrates a schematic diagram of a network through which traffic information is provided;
FIG. 2a illustrates a partial syntax of a component frame including traffic information;
FIG. 2b illustrates a format of a TPEG-CTT message with an emphasis on status components delivering traffic information;
FIG. 2c illustrates a format of a TPEG-CTT message with an emphasis on coordinate components delivering link information;
FIG. 3a illustrates a syntax of a link information component
FIG. 3b illustrates a format of the TPEG-CTT message with an emphasis on link information components;
FIG. 3c illustrates a format to transmit information on a sub-link through coordinate components;
FIG. 4 illustrates a block diagram of a navigation terminal that receives traffic information transmitted from a server; and
FIGS. 5a through 5c illustrate examples of displaying traffic information such as average speed in a link, and a sub-link.

### 5. MODES FOR CARRYING OUT THE INVENTION

One such use for digital broadcasts is to satisfy an existing demand for traffic information. Proposals that involve the use of digital broadcasts for this purpose contemplate the use of standardized formatting of traffic information to be broadcast. This approach may be used to enable the use of traffic information receiving terminals made by different manufacturers, which each could be configured to detect and interpret traffic information broadcast in the same way.

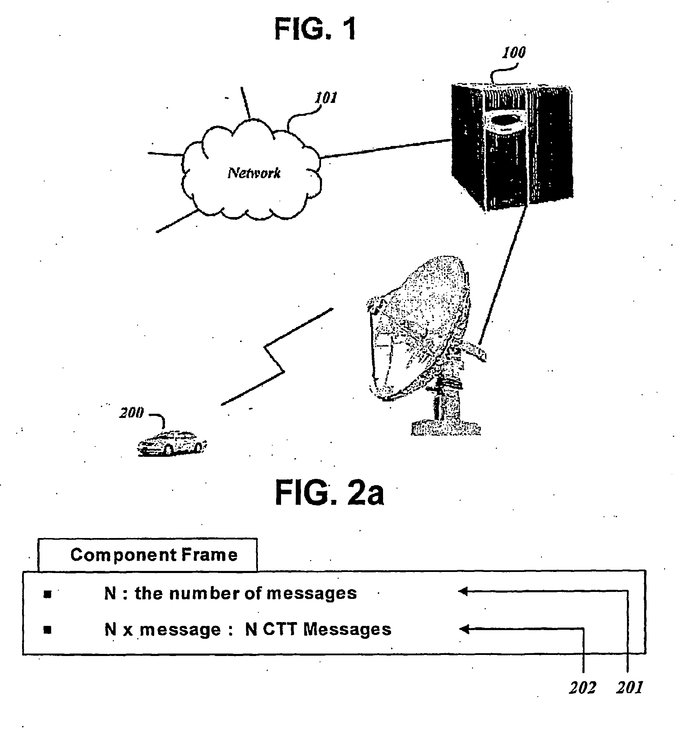

FIG. 1 is a schematic diagram of a network through which traffic information is provided. A traffic information providing server 100 in a broadcast station may transmit traffic information, e.g., traffic congestion information collected from various sources (e.g., operator input, or information received from another server or probe cars through a network 101) wirelessly so that a traffic information receiving terminal (e.g., navigation system installed in a car 200) may receive the traffic information. In the below explanation about implementations, the traffic information means traffic congestion information.

The traffic information wirelessly transmitted from the traffic information providing server 100 may be of the form of a component frame. As shown in FIG. 2a, a component frame may include a field 201 indicative of the number of messages included therein and a sequence of transport protocol expert group messages 202, where the number of the messages being equal to the value stored in the field 201. The transport protocol expert group message will be referred to as the TPEG-CTT message hereinafter.

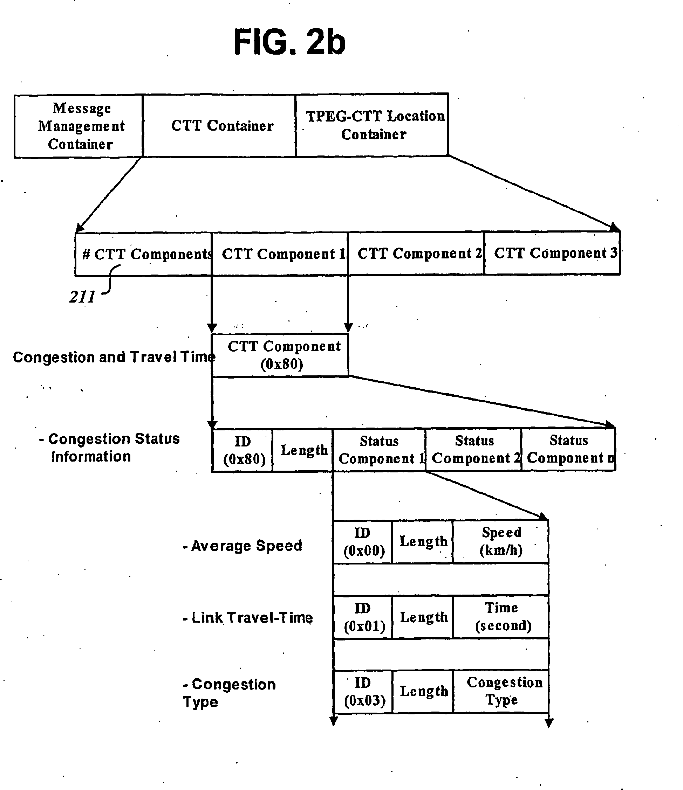

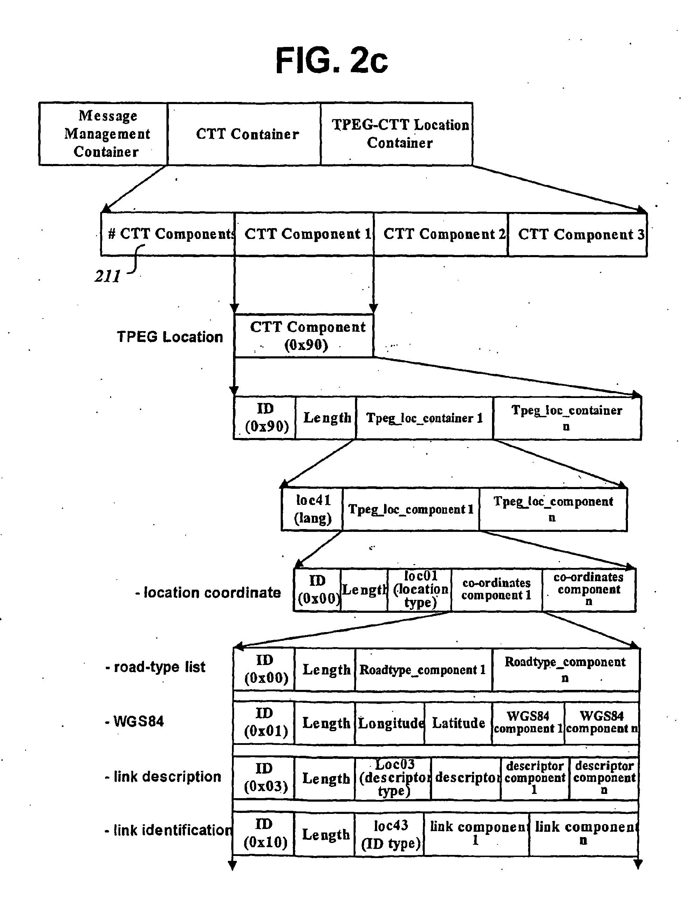

As shown in FIGS. 2b and 2c, one message segment of the sequence 202, i.e., one TPEG-CTT message, may include a message management container including information on date and time, the message occurrence time, etc., a congestion and travel-time information (CTT) container, and a TPEG-CTT location container. The CTT container may include a field 211 indicative of the number of CTT components included in the CTT container and the TPEG-CTT location container. The field 211 may be followed by CTT components, the number of which is equal to the value stored in the field 211.

In various implementations, if a CTT component includes traffic congestion information, the CTT component is given an ID of 0x80, as shown in FIG. 2b, and includes one or more status components therein. Each status component may include an ID indicative of the information included therein. For example, a status component including an ID of 0x00 delivers the average speed in a link. A status component including an ID of 0x01 delivers link travel time. A status component including an ID of 0x03 delivers information on the degree or type of congestion. In the description, specific IDs are described as assignments to structures associated with specific information. The actual value of an assigned ID (e.g., 0x80) is exemplary, and different implementations may assign different values for specific associations or circumstances. Thus, the CTT component may be used to provide various different types of data that may be signaled based on an identifier. For example, FIG. 2B illustrates components with identifiers of 0x00 and 0x01 signaling, respectfully, speed and travel-time information.

Further, according to the various implementations if a CTT component includes link location information, the CTT component is given an ID of 0x90, as shown in FIG. 2c, and includes one or more TPEG-CTT location sub-containers. Each TPEG-CTT location sub-container 'Tpeg_loc_container' includes one or more TPEG-CTT location components, each of which includes one or more coordinate components having an ID of 0x00. Each coordinate component delivers information on a link or links for which the status component includes traffic information. A link may refer to a road segment which starts and ends at junctions and has no junction in between. A coordinate component including an ID of 0x00 includes information on the link type (e.g., express way, national road, etc). A coordinate component including an ID of 0x01 includes coordinate information which may be expressed in the WGS84 format. A coordinate component including an ID of 0x03 includes link description information and a coordinate component including an ID of 0x10 includes link identification information.

The server 100 may construct the TPEG-CTT information as shown in FIGS. 2a through 2c from traffic information collected from various sources and may transmit the constructed TPEG-CTT information to traffic information receiving terminals wirelessly.

Information may be provided on a specific link in more detail. For example, if a driver wants to go to a location within a link which ends at an intersection and there is traffic congestion around the intersection, the average speed in the road segment is very low. If the driver estimates the approximate arrival time based on the average speed in the road, the actual arrival time may significantly deviate from the estimated arrival time, such as, for example, when the destination is near the congested intersection. As a result, the driver may benefit from detailed traffic information around the specific location.

In various implementations, the server 100 collects traffic information in a centralized manner, and creates and provides traffic information for a sub-link within a link. In one implementation, a sub-link is created if the difference between the average speed in the sub-link and the average speed in the other segment within the link exceeds a predetermined threshold level (e.g., 5 m/s or 10 m/s).

A process, according to various implementations, for providing traffic information on a virtual sub-link that does not correspond to a full actual link will now be described in detail.

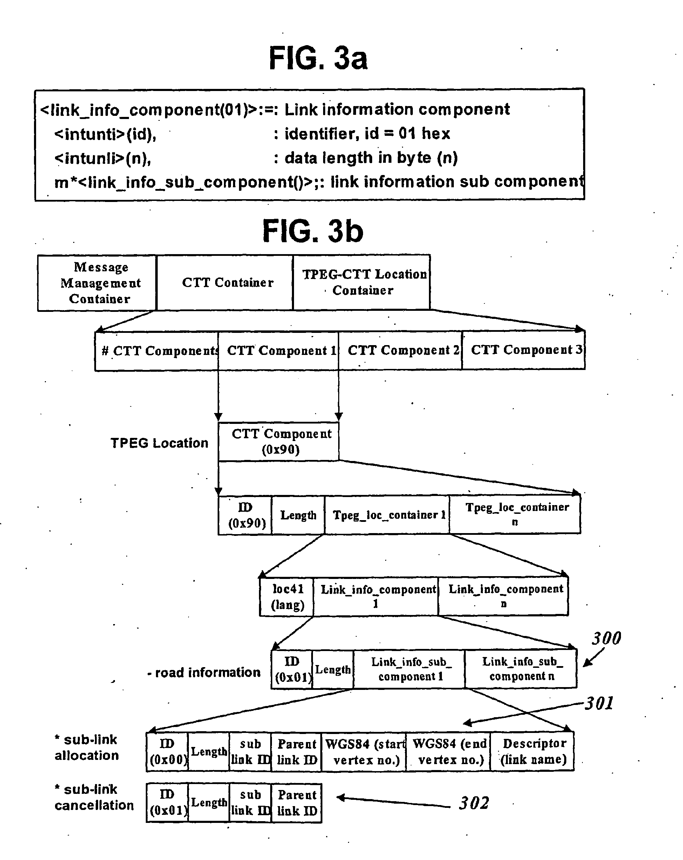

To provide traffic information on a sub-link within a link, the server 100 may construct a link information component, as shown in FIG. 3a, and may deliver the link information component via a TPEG-CTT location sub-container. The link information component is allocated an ID of 0x01 distinct, from the ID of a coordinate component.

As shown in FIG. 3b, each link information component may include a link allocating sub-component 301 for allocating a sub-link as a virtual link within a link and a link canceling sub-component 302 for canceling an existing sub-link. A sub-link need not be an actual link but may be treated as a link in that congestion and traveling time information may be provided for each sub-link.

The link allocating sub-component 301 has an ID of 0x00 and may include a sub-link ID to allocate to a sub-link to be established, the ID of a parent link within which the sub-link is established, coordinate information indicative of the start and end positions of the sub-link, and/or a descriptor. In various implementations, the coordinate information may be a pair of 4-byte longitude and 4-byte latitude or indices of the vertices corresponding to the start and end positions of the sub-link formed within the parent link. The link canceling sub-component 302 has an ID of 0x01 and may include a sub-link ID, which is the ID of the sub-link to be canceled, and a parent link ID.

The server 100 may construct the TPEG-CTT information as shown in FIGS. 2a through 2c from traffic information collected from various sources and may transmit the constructed TPEG-CTT information to traffic information receiving terminals wirelessly. Under various circumstances, such as, for example, during the transmission, if the difference between the average speed in a local segment within a link and the average speed in the other segment of the link exceeds a threshold value, the server 100 may create a link allocating sub-component 301 for establishing the local segment as a sub-link and may deliver the link allocating sub-component 301 via the link information component 300.

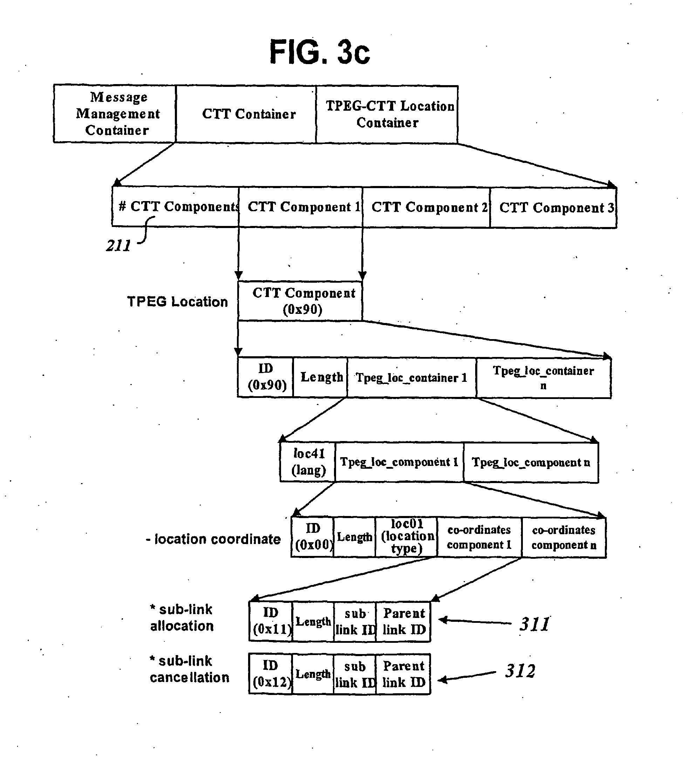

In another implementation , information on sub-link allocation and cancellation may be carried by a coordinate component including an ID of 0x00, as shown in FIG. 3c. In this case, IDs of, for example, 0x11 and 0x12 are allocated to a coordinate component carrying sub-link information to distinguish from other coordinate components carrying road-type list, WGS84, link description, and link identification.

In this implementation, location information that may be needed for allocating a sub-link, for example, WGS84 information on start and end points and sub-link description information, may be included dispersedly in both a WGS84 component and a description component shown in FIG. 2c.

The server 100 may transmit traffic information (e.g., average speed, link travel time, the degree of congestion, etc) for the sub-link in a similar manner to links.

According to various implementations, if the length of the sub-link which shows an average speed deviation larger than a threshold level change, i.e., the change in the length of the sub-link exceeds a predetermined length (e.g., 20 m in the case of downtown roads), the server 100 may create and may transmit a link allocating sub-component (or sub-link allocating coordinate component) for reallocating a sub-link including the changed start and end positions. In this case, the server 100 may allocate to the sub-component an ID, e.g., 0x02 (or 0x13) instead of 0x00 (or 0x11 indicative of a sub-link allocating coordinate component) to inform traffic information receiving terminals that a sub-link is established again within a parent link which already has a sub-link therein. A similar process may be used to shorten or move a sub-link, with the creating of a link shortening sub-component or a link moving sub-component.

After a sub-link is allocated in a link, the average speed in the link and the average speed in the sub-link may be provided separately.

In one implementation, if the difference between the average speed in a sub-link within a link and the average speed in the other segment of the link goes below the same or a different threshold value while the server 100 transmits traffic information for the sub-link, the server 100 may create a link canceling sub-component 302 for canceling the allocated sub-link as shown in FIG. 3b and may deliver the link canceling sub-component 302 via the link information component 300.

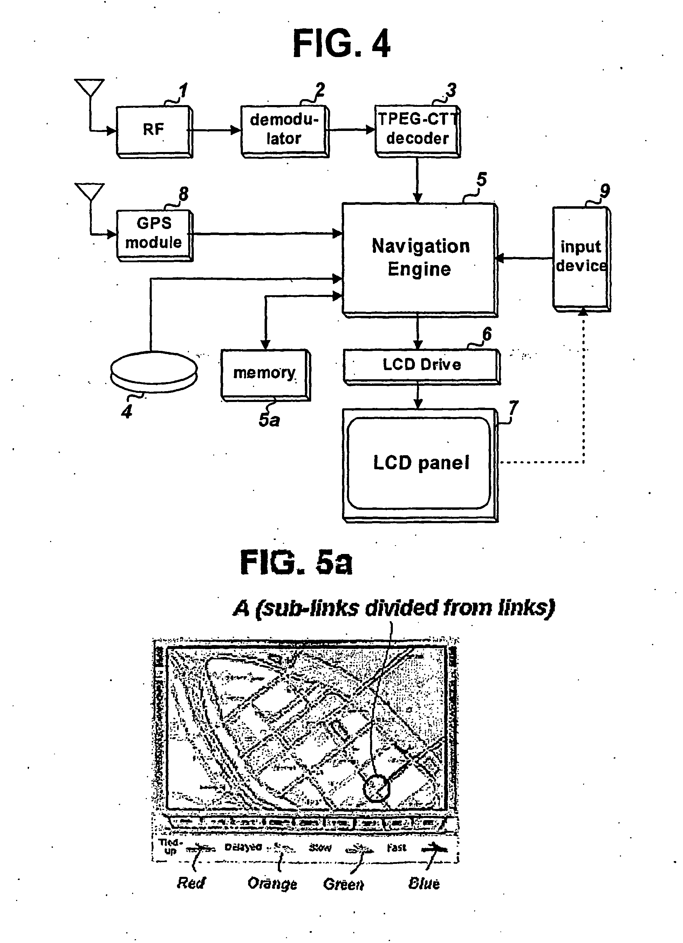

Figs. 4-6 are example implementations of systems for receiving and utilizing traffic information. Other systems may be organized differently or include different components. Specifically, FIG. 4 is an example of a block diagram of a navigation terminal that receives traffic information transmitted from the server 100.

The navigation terminal includes a tuner 1 for receiving modulated traffic information signals by resonating at the required frequency band, a demodulator 2 for outputting traffic information signals by demodulating the modulated signals from the tuner 1, a TPEG-CTT decoder 3 for extracting traffic information by decoding the demodulated traffic information signals, a GPS module 8 for calculating the current position (i.e., latitude, longitude, and altitude) by receiving signals from a plurality of satellites, storage structure 4 for storing various graphic data and an electronic map including information on links and nodes, an input unit 9 for receiving user input, a navigation engine 5 for controlling screen display based on the user input, the current position, and extracted traffic information, a memory 5a for storing data temporarily, an LCD panel 7 for displaying data, and an LCD drive 6 for driving the LCD panel 7 according to data to be presented. The input unit 9 may be a touch screen incorporated into the LCD panel 7.

The tuner 1 tunes to the frequency of the signals transmitted by the server 100 and the demodulator 2 demodulates the tuned signals in a predetermined manner. The TPEG-CTT decoder 3 extracts TPEG-CTT messages, as shown in FIGS. 2a through 2c and FIGS. 3a and 3b (or 3c), and stores the TPEG-CTT messages temporarily. Interpreting the temporarily stored TPEG-CTT messages, the TPEG-CTT decoder 3 sends the extracted information and/or control data to the navigation engine 5. Though various kinds of information are provided for the navigation engine 5 by the TPEG-CTT decoder 3, for purposes of brevity, the following description will focus on the method for allocating sub-links and the method for processing traffic information for sub-links.

The TPEG-CTT decoder 3 extracts data/time and message occurrence time included in the message management container of each TPEG-CTT message and determines if the following container is a CTT event container based on 'message element' information (i.e. an identifier). If it is determined that the following container is a CTT event container, the TPEG-CTT decoder 3 provides the navigation engine 5 with the information obtained from the CTT component included in the CTT event container so that the navigation engine 5 can display congestion and travel-time information and link information, which will be described below. Providing the navigation engine 5 with the information may include determining, based on identifiers, that the traffic information includes a message management container including status or sub-link information within various message components within the message management container. The components may each include different status or sub-link information associated with different links, composite links, or locations and identifiers associated with the different status or sub-link information. The containers and components may each include information associated with a generation time, version number, data length, and identifiers of included information.

The TPEG-CTT decoder 3 then extracts information on the link location about which the previously extracted information may be created from the following TPEG-CTT location container. The position information may be, for example, the coordinates (i.e., latitudes and longitudes) of the start and end positions or a link ID, depending on the type of the TPEG-CTT location container. If the navigation terminal is equipped with the storage structure 4, the navigation engine 5 finds the link location about which the received information is created with reference to information on each link and node stored in the storage structure 4. The navigation engine 5 may convert the coordinates of the link into the link ID or vice versa.

In the implementation of FIG. 3b, the TPEG-CTT decoder 3 may determine if a link information component including an ID of 0x01 is delivered via a TPEG-CTT location sub-container and if so, may extract each sub-component from the link information component. If the extracted sub-component is a link allocating sub-component (e.g., includes an appropriate identifier), such as including an ID of 0x00 for allocating a sub-link, the TPEG-CTT decoder 3 may extract the ID of the sub-link to allocate, the ID of the parent link, information on the start and end positions, and descriptor and provides the extracted information for the navigation engine 5 so that the extracted information may be stored as a temporary link entry in the memory 5a. If the extracted sub-component is a link canceling sub-component (e.g., includes an appropriate identifier), such as including an ID of 0x01 for canceling an existing sub-link, the TPEG-CTT decoder 3 may make a request for removing a temporary link entry including an ID that is the same as the sub-link ID of the sub-component so that the navigation engine 5 can remove the sub-link entry from the memory 5a.

In the implementation of FIG. 3c, a sub-link allocating coordinate component or a sub-link cancellation coordinate component may be extracted from a TPEG-CTT location component including ID of 0x00 included in a TPEG-CTT location sub container, and the above-explained operations may be conducted according to information included in the extracted component.

The navigation engine 5 reads a part of the electronic map centered around the position coordinates received from the GPS module 8 from the storage structure 4 and displays the map on the LCD panel 7 via the LCD drive 6. A particular graphic symbol is displayed at the location corresponding to the current position on the LCD panel 7.

The navigation engine 5 may display the average speed or average travel time in a link received from the TPEG-CTT decoder 3 at a location corresponding to the coordinates or link ID delivered via the TPEG-CTT location container following the container delivering the average speed or average travel time information. In this case, the navigation engine 5 may search the storage structure 4 for the link corresponding to the coordinates or link ID received from the TPEG-CTT location container. If the link is not found, then the navigation engine 5 may determine if there is a matched temporary link entry in the memory 5a. In this search operation, temporarily allocated sub-links as well as actual links may be searched. The traffic information for the link and/or sub-link specified by the search operation may be extracted from the corresponding status component included in a CTT component including an ID of 0x80.

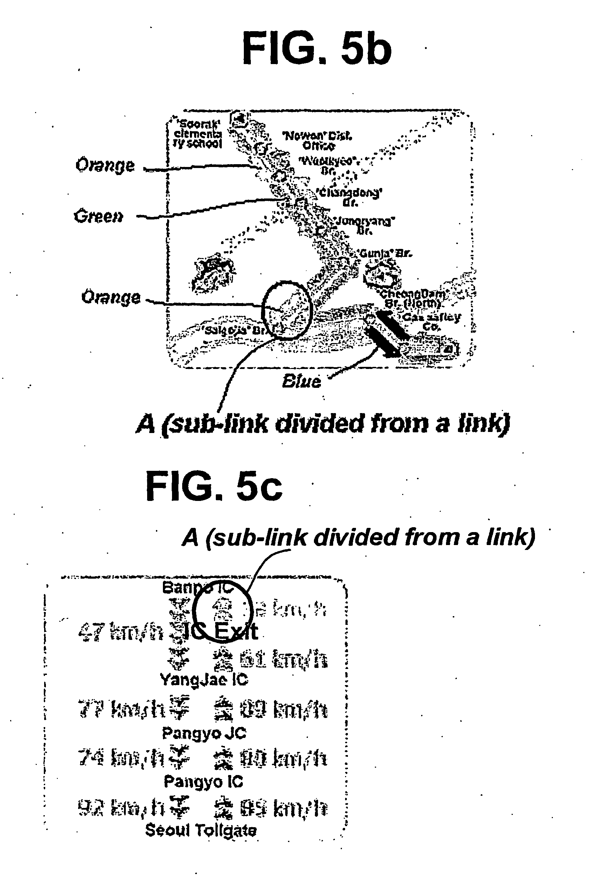

There are various alternative methods for the navigation engine 5 to display traffic information. For example, the navigation engine 5 may show links in different colors according to the average speed in the links, as shown in FIGS. 5a and 5b, or may show the average speed with number in each link as shown in FIG. 5c. In FIGS. 5a and 5b, the red, orange, green, blue colors indicate average speeds of 0∼10 km, 10∼20 km, 20∼40 km, over 40 km, respectively.

If the navigation terminal is not equipped with the storage structure 4 for storing an electronic map, the terminal may show the average speed or the travel time in links located in front of the current position with different colors as shown in FIG. 5b, or with figures as shown in FIG. 5c. If the route of the car with the navigation terminal installed is determined, the navigation terminal may show the average speed in the links included in the determined route instead of the links located in front of the current position.

If the traffic information for a temporary link entry stored in the memory 5a, i.e., a sub-link, is received, the navigation engine 5 may display the traffic information for the sub-link with colors or figures, as marked 'A' in FIGS. 5a through 5c to be distinguished from the traffic information for the parent link.

If the terminal in FIG. 4 is equipped with a voice output device, the terminal may output received traffic information for a specified link or sub-links included in a specified route in voice. If the specified link or one of the links included in the specified route is a sub-link, a voice message describing the average speed in the sub-link is generated. If the descriptor in the link allocating sub-component (or link description component) shown in FIG. 3b is "xxx", the voice message may be "the average speed in xxx segment is nn".

The present disclosure enables estimation of an approximate arrival time even when the roads around the destination are congested locally by providing additional traffic information for a road segment showing a big deviation in the average speed from the other segment of the road.

In the previous discussion, wherever average speed has been referenced, it may be interpreted as either of actual or predicted average speed, or it may be replaced or supplemented with other status or component based information, such as, for example, actual or predicted travel time (e.g., to traverse the link), congestion tendency, and/or congestion amount.

## Claims

1. A method for identifying traffic information, the method comprising:
receiving a message frame including :
- a sequence of one or several traffic information messages wherein at least one traffic information message has :
- a location information structure having a sub-link identifier enabling a determination of whether the received traffic information includes sub-link information, information identifying a link within which the sub-link is located, and sub-link location information enabling a determination of a portion of the link that corresponds to the sub-link; and,
- information corresponding to a travel time for the sub-link ; and,
- a first number identifier (N) corresponding to the number of traffic information messages,
determining, based on the number identifier, the number of traffic information messages in the message frame ;
determining, based on the sub-link identifier, whether the received traffic information includes sub-link information; and, determining sub-link characteristics if the sub-link identifier enables a determination that the received traffic information includes sub-link information.

2. The method of claim 1, further comprising receiving traffic status information enabling a determination of traffic information for a sub-link, and wherein determining the sub-link characteristics includes associating the received traffic status information as sub-link traffic status information for the sub-link, and enabling perception of an association between the sub-link and the link, and an association between the received traffic status information and the sub-link.

3. The method of claim 1 or 2, wherein receiving traffic information includes receiving a data length associated with the traffic information, a text name or description of the sub-link, and a start and end location of the sub-link.

4. The method of anyone of claims 1 through 3, wherein receiving sub-link location information includes receiving vertex, coordinate, or longitude and latitude information that corresponds to a location associated with the sub-link.

5. The method of anyone of claims 1 through 4, wherein receiving sub-link location information includes receiving vertex, coordinate, or longitude and latitude information that corresponds to the link.

6. The method of anyone of claims 1 through 5, wherein after the sub-link is determined to be within the link, receiving additional sub-link information to enable deletion of the sub-link.

7. The method of claim 6, wherein the sub-link is deleted only if the received additional sub-link information (302) includes an identifier that enables a determination that the sub-link is to be deleted.

8. The method of claim 6 or 7, wherein the received additional sub-link information (302) specifies the sub-link identifier and the identifier of the link.

9. The method of anyone of claims 1 through 8, further comprising receiving additional sub-link information (302) after the sub-link is determined to be within the link, and using the received additional sub-link information (302) to alter the position of the determined sub-link within the link.

10. The method of claim 9, wherein the received additional sub-link information (302) includes at least one of a start location and an end location of the determined sub-link.

11. The method of claim 9 or 10, further comprising using the received additional sub-link information (302) to extend or shorten a length of the sub-link.

12. The method of anyone of claims 1 through 11, further comprising receiving additional sub-link information after the sub-link is determined to be within the link, and using the received additional sub-link information to alter the position of the determined sub-link beyond location constraints associated with the link.

13. The method of anyone of claims 1 through 12, further comprising receiving information corresponding to a message management structure including information corresponding to a generation time of the information included in the message management structure.

14. The method of claim 13, wherein the generation time included within the received message management structure relates to status information for the sub-link.

15. The method of claim 14, wherein the generation time included within the received message management structure relates to a plurality of message component structures that correspond to more than one of a predicted or current traffic tendency, a predicted or current amount of traffic, a predicted or current speed, and a predicted or current time to traverse a particular link.

16. The method of anyone of claims 13 through 15, wherein receiving information reflecting a message component structure includes receiving information associated with identification and configuration of the sub-link.

17. The method of anyone of claims 1 through 16, further comprising receiving traffic status information for the sub-link including information associated with at least one of a predicted or current travel speed on the sub-link, a predicted or current congestion level or amount on the sub-link, a predicted or current travel time to traverse the sub-link, or a predicted or current speed of travel on the sub-link.

18. The method of claim 17, wherein the traffic status information for the sub-link differs from traffic status information for the link.

19. The method of claim 18, wherein the traffic status information for the sub-link is received after receiving traffic status information that is configured to reveal status for the link, the sub-link status information being configured to enable updated status information for a portion of the link corresponding to the sub-link.

20. The method of anyone of claims 1 through 19, wherein receiving sub-link information includes receiving a text descriptor associated with the sub-link.

21. An apparatus for identifying traffic information, the apparatus comprising:
means (1) for receiving a message frame including :
- a sequence of one or several traffic information messages wherein at least one traffic information message has :
- a location information structure having a sub-link identifier enabling a determination of whether the received traffic information includes sub-link information, information identifying a link within which the sub-link is located, and sub-link location information enabling a determination of a portion of the link that corresponds to the sub-link ; and,
- information corresponding to a travel time for the sub-link, and,
- a first number identifier (N) corresponding to the number of traffic information messages,
means for determining, based on the number identifier, the number of traffic information messages in the message frame,
means (3) for determining, based on the sub-link identifier, whether the received traffic information includes sub-link information; and,
means (5) for determining sub-link characteristics if the sub-link identifier enables a determination that the received traffic information includes sub-link information.

22. The apparatus of claim 21, further comprising means (1) for receiving traffic status information enabling a determination of traffic information for a sub-link, and wherein determining sub-link characteristics includes associating the received traffic status information as sub-link traffic status information for the sub-link, and enabling perception of an association between the sub-link and the link, and an association between the received traffic status information and the sub-link.

23. The apparatus of claim 21 or 22, wherein the means (1) for receiving include means for receiving additional sub-link information after the sub-link is determined to be within the link, the apparatus further comprising means for using the received additional sub-link information to alter the position of the determined sub-link within the link.

24. The apparatus of claim 23, further comprising means for using the received additional sub-link information to extend or shorten a length of the sub-link.

25. The apparatus of anyone of claims 21 through 24, wherein the means for receiving (1) include means for receiving additional sub-link information after the sub-link is determined to be within the link, the apparatus further comprising means for using the received additional sub-link information to alter the position of the determined sub-link beyond location constraints associated with the link.

## Patentansprüche

1. Verfahren zum Identifizieren von Verkehrsinformationen, wobei das Verfahren aufweist:
Empfangen eines Nachrichtenrahmens, der umfaßt:
- eine Abfolge einer oder mehrerer Verkehrsinformationsnachrichten, wobei mindestens eine Verkehrsinformationsnachricht aufweist:
- eine Ortsinformationsstruktur mit einer Teilverbindungskennung, die eine Feststellung ermöglicht, ob die empfangenen Verkehrsinformationen Teilverbindungsinformationen, Informationen, die eine Verbindung identifizieren, innerhalb derer sich die Teilverbindung befindet, und Teilverbindungsortsinformationen umfassen, die eine Feststellung eines Abschnitts der Verbindung ermöglichen, der der Teilverbindung entspricht; und
- Informationen, die einer Fahrzeit für die Teilverbindung entsprechen; und
- eine erste Zahlenkennung (N), die der Zahl der Verkehrsinformationsnachrichten entspricht,
Feststellen, beruhend auf der Zahlenkennung, der Zahl der Verkehrsinformationsnachrichten im Nachrichtenrahmen;
Feststellen, beruhend auf der Teilverbindungskennung, ob die empfangenen Verkehrsinformationen Teilverbindungsinformationen umfassen; und
Feststellen von Teilverbindungseigenschaften, wenn die Teilverbindungskennung eine Feststellung ermöglicht, daß die empfangenen Verkehrsinformationen Teilverbindungsinformationen umfassen.

2. Verfahren nach Anspruch 1, das ferner das Empfangen von Verkehrslageinformationen aufweist, die eine Feststellung von Verkehrsinformationen für eine Teilverbindung ermöglichen, und wobei das Feststellen der Teilverbindungseigenschaften das Verknüpfen der empfangenen Verkehrslageinformationen als Teilverbindungsverkehrslageinformationen für die Teilverbindung umfaßt, und eine Wahrnehmung einer Verknüpfung zwischen der Teilverbindung und der Verbindung, und eine Verknüpfung zwischen den empfangenen Verkehrslageinformationen und der Teilverbindung ermöglichen.

3. Verfahren nach Anspruch 1 oder 2, wobei das Empfangen von Verkehrsinformationen das Empfangen einer Datenlänge, die mit den Verkehrsinformationen verknüpft ist, eines Textnamens oder einer Beschreibung der Teilverbindung, und eines Start- und Endorts der Teilverbindung aufweist.

4. Verfahren nach einem der Ansprüche 1 bis 3, wobei das Empfangen von Teilverbindungsortsinformationen das Empfangen von Scheitelpunkts-, Koordinaten-, oder Längen- und Breiteninformationen aufweist, die einem Ort entsprechen, der mit der Teilverbindung verknüpft ist.

5. Verfahren nach einem der Ansprüche 1 bis 4, wobei das Empfangen von Teilverbindungsortsinformationen das Empfangen von Scheitelpunkts-, Koordinaten-, oder Längen- und Breiteninformationen aufweist, die der Verbindung entsprechen.

6. Verfahren nach einem der Ansprüche 1 bis 5, wobei nachdem festgestellt worden ist, daß sich die Teilverbindung innerhalb der Verbindung befindet, zusätzliche Teilverbindungsinformationen empfangen werden, um die Löschung der Teilverbindung zu ermöglichen.

7. Verfahren nach Anspruch 6, wobei die Teilverbindung nur gelöscht wird, wenn die empfangenen zusätzlichen Teilverbindungsinformationen (302) eine Kennung umfassen, die eine Feststellung ermöglicht, daß die Teilverbindung gelöscht werden soll.

8. Verfahren nach Anspruch 6 oder 7, wobei die empfangenen zusätzlichen Teilverbindungsinformationen (302) die Teilverbindungskennung und die Kennung der Verbindung spezifizieren.

9. Verfahren nach einem der Ansprüche 1 bis 8, das ferner das Empfangen zusätzlicher Teilverbindungsinformationen (302), nachdem festgestellt worden ist, daß sich die Teilverbindung innerhalb der Verbindung befindet, und das Verwenden der empfangenen zusätzlichen Teilverbindungsinformationen (302) aufweist, um die Position der festgestellten Teilverbindung innerhalb der Verbindung zu ändern.

10. Verfahren nach Anspruch 9, wobei die empfangenen zusätzlichen Teilverbindungsinformationen (302) mindestens einen eines Startorts und eines Endorts der festgestellten Teilverbindung umfassen.

11. Verfahren nach Anspruch 9 oder 10, das ferner das Verwenden der empfangenen zusätzlichen Teilverbindungsinformationen (302) aufweist, um eine Länge der Teilverbindung zu verlängern oder zu verkürzen.

12. Verfahren nach einem der Ansprüche 1 bis 11, das ferner das Empfangen zusätzlicher Teilverbindungsinformationen, nachdem festgestellt worden ist, daß sich die Teilverbindung innerhalb der Verbindung befindet, und das Verwenden der empfangenen zusätzlichen Teilverbindungsinformationen aufweist, um die Position der festgestellten Teilverbindung jenseits von Ortsbeschränkungen zu ändern, die mit der Verbindung verknüpft sind.

13. Verfahren nach einem der Ansprüche 1 bis 12, das ferner das Empfangen von Informationen aufweist, die einer Nachrichtenverwaltungsstruktur entsprechen, die Informationen enthält, die einer Erzeugungszeit der Informationen entsprechen, die in der Nachrichtenverwaltungsstruktur enthalten sind.

14. Verfahren nach Anspruch 13, wobei die Erzeugungszeit, die innerhalb der empfangenen Nachrichtenverwaltungsstruktur enthalten ist, Lageinformationen für die Teilverbindung betrifft.

15. Verfahren nach Anspruch 14, wobei die Erzeugungszeit, die innerhalb der empfangenen Nachrichtenverwaltungsstruktur enthalten ist, mehrere Nachrichtenkomponentenstrukturen betrifft, die mehr als einer einer vorhergesagten oder gegenwärtigen Verkehrstendenz, einer vorhergesagten oder gegenwärtigen Verkehrsmenge, einer vorhergesagten oder gegenwärtigen Geschwindigkeit, und einer vorhergesagten oder gegenwärtigen Zeit entsprechen, um eine bestimmte Verbindung zu durchfahren.

16. Verfahren nach einem der Ansprüche 13 bis 15, wobei das Empfangen von Informationen, die eine Nachrichtenkomponentenstruktur wiedergeben, das Empfangen von Informationen aufweist, die mit der Identifizierung und Konfiguration der Teilverbindung verknüpft sind.

17. Verfahren nach einem der Ansprüche 1 bis 16, das ferner das Empfangen von Verkehrslageinformationen für die Teilverbindung aufweist, die Informationen umfassen, die mit mindestens einer einer vorhergesagten oder gegenwärtigen Fahrgeschwindigkeit auf der Teilverbindung, einem vorhergesagten oder gegenwärtigen Staugrad oder einer Staumenge auf der Teilverbindung, einer vorhergesagten oder gegenwärtigen Fahrzeit, um die Teilverbindung zu durchfahren, oder einer vorhergesagten oder gegenwärtigen Fahrgeschwindigkeit auf der Teilverbindung verknüpft sind.

18. Verfahren nach Anspruch 17, wobei sich die Verkehrslageinformationen für die Teilverbindung von Verkehrslageinformationen für die Verbindung unterscheiden.

19. Verfahren nach Anspruch 18, wobei die Verkehrslageinformationen für die Teilverbindung nach dem Empfangen von Verkehrslageinformationen empfangen werden, die so konfiguriert sind, daß sie die Lage für die Verbindung aussagen, wobei die Teilverbindungslageinformationen so konfiguriert sind, daß sie aktualisierte Lageinformationen für einen Abschnitt der Verbindung ermöglichen, die der Teilverbindung entspricht.

20. Verfahren nach einem der Ansprüche 1 bis 19, wobei das Empfangen von Teilverbindungsinformationen das Empfangen eines Textdeskriptors aufweist, der mit der Teilverbindung verknüpft ist.

21. Vorrichtung zum Identifizieren von Verkehrsinformationen, wobei die Vorrichtung aufweist:
eine Einrichtung (1) zum Empfangen eines Nachrichtenrahmens, der umfaßt:
- eine Abfolge einer oder mehrerer Verkehrsinformationsnachrichten, wobei mindestens eine Verkehrsinformationsnachricht aufweist:
- eine Ortsinformationsstruktur mit einer Teilverbindungskennung, die eine Feststellung ermöglicht, ob die empfangenen Verkehrsinformationen Teilverbindungsinformationen, Informationen, die eine Verbindung identifizieren, innerhalb derer sich die Teilverbindung befindet, und Teilverbindungsortsinformationen umfassen, die eine Feststellung eines Abschnitts der Verbindung ermöglichen, der der Teilverbindung entspricht; und
- Informationen, die einer Fahrzeit für die Teilverbindung entsprechen, und
- eine erste Zahlenkennung (N), die der Zahl der Verkehrsinformationsnachrichten entspricht,
eine Einrichtung zum Feststellen, beruhend auf der Zahlenkennung, der Zahl der Verkehrsinformationsnachrichten im Nachrichtenrahmen,
eine Einrichtung (3) zum Feststellen, beruhend auf der Teilverbindungskennung, ob die empfangenen Verkehrsinformationen Teilverbindungsinformationen umfassen; und
eine Einrichtung (5) zum Feststellen von Teilverbindungseigenschaften, wenn die Teilverbindungskennung eine Feststellung ermöglicht, daß die empfangenen Verkehrsinformationen Teilverbindungsinformationen umfassen.

22. Vorrichtung nach Anspruch 21, die ferner eine Einrichtung (1) zum Empfangen von Verkehrslageinformationen aufweist, die eine Feststellung von Verkehrsinformationen für eine Teilverbindung ermöglichen, und wobei das Feststellen von Teilverbindungseigenschaften das Verknüpfen der empfangenen Verkehrslageinformationen als Teilverbindungsverkehrslageinformationen für die Teilverbindung aufweist, und eine Wahrnehmung einer Verknüpfung zwischen der Teilverbindung und der Verbindung, und eine Verknüpfung zwischen den empfangenen Verkehrslageinformationen und der Teilverbindung ermöglichen.

23. Vorrichtung nach Anspruch 21 oder 22, wobei die Einrichtung (1) zum Empfangen eine Einrichtung zum Empfangen zusätzlicher Teilverbindungsinformationen aufweist, nachdem festgestellt worden ist, daß sich die Teilverbindung innerhalb der Verbindung befindet, wobei die Vorrichtung ferner eine Einrichtung zum Verwenden der empfangenen zusätzlichen Teilverbindungsinformationen aufweist, um die Position der festgestellten Teilverbindung innerhalb der Verbindung zu ändern.

24. Vorrichtung nach Anspruch 23, die ferner eine Einrichtung zum Verwenden der empfangenen zusätzlichen Teilverbindungsinformationen aufweist, um eine Länge der Teilverbindung zu verlängern oder zu verkürzen.

25. Vorrichtung nach einem der Ansprüche 21 bis 24, wobei die Einrichtung (1) zum Empfangen eine Einrichtung zum Empfangen zusätzlicher Teilverbindungsinformationen aufweist, nachdem festgestellt worden ist, daß sich die Teilverbindung innerhalb der Verbindung befindet, wobei die Vorrichtung ferner eine Einrichtung zum Verwenden der empfangenen zusätzlichen Teilverbindungsinformationen aufweist, um die Position der festgestellten Teilverbindung jenseits von Ortsbeschränkungen zu ändern, die mit der Verbindung verknüpft sind.

## Revendications

1. Procédé d'indentification d'informations de trafic, le procédé comprenant les étapes consistant à :
recevoir une trame de message comprenant :
- une séquence d'un ou de plusieurs messages d'informations de trafic dans laquelle au moins un message d'informations de trafic comporte :
- une structure d'informations de localisation comportant un identifiant de sous-liaison permettant de déterminer si les informations de trafic reçues comprennent des informations de sous-liaison, des informations identifiant une liaison au sein de laquelle la sous-liaison est localisée, et des informations de localisation de sous-liaison permettant une détermination d'une partie de la liaison qui correspond à la sous-liaison ou non ; et
- des informations correspondant à un temps de déplacement pour la sous-liaison ; et
- un premier identifiant de nombre (N) correspondant au nombre de messages d'informations de trafic,
déterminer, sur la base de l'identifiant de nombre, le nombre de messages d'informations de trafic dans la trame de message ;
déterminer, sur la base de l'identifiant de sous-liaison, si les informations de trafic reçues comprennent des informations de sous-liaison ou non ; et
déterminer des caractéristiques de sous-liaison si l'identifiant de sous-liaison permet de déterminer que les informations de trafic reçues comprennent des informations de sous-liaison.

2. Procédé selon la revendication 1, comprenant en outre l'étape consistant à recevoir des informations de statut de trafic permettant une détermination d'informations de trafic pour une sous-liaison, et dans lequel l'étape consistant à déterminer les caractéristiques de sous-liaison comprend les étapes consistant à associer les informations de statut de trafic reçues en tant qu'informations de statut de trafic de sous-liaison pour la sous-liaison, et à permettre la perception d'une association entre la sous-liaison et la liaison, et une association entre les informations de statut de trafic reçues et la sous-liaison.

3. Procédé selon la revendication 1 oder 2, dans lequel l'étape consistant à recevoir des informations de trafic comprend l'étape consistant à recevoir une longueur de données associée aux informations de trafic, un nom de texte ou une description de la sous-liaison, et une localisation de début et de fin de la sous-liaison.

4. Procédé selon l'une quelconque des revendications 1 à 3, dans lequel l'étape consistant à recevoir des informations de localisation de sous-liaison comprend l'étape consistant à recevoir des informations de sommet, de coordonnées, ou de longitude et de latitude qui correspondent à une localisation associée à la sous-liaison.

5. Procédé selon l'une quelconque des revendications 1 à 4, dans lequel l'étape consistant à recevoir des informations de localisation de sous-liaison comprend l'étape consistant à recevoir des informations de sommet, de coordonnées, ou de longitude et de latitude qui correspondent à la liaison.

6. Procédé selon l'une quelconque des revendications 1 à 5, comprenant l'étape, après qu'il est déterminé que la sous-liaison est au sein de la liaison, consistant à recevoir des informations de sous-liaison supplémentaires pour permettre la suppression de la sous-liaison.

7. Procédé selon la revendication 6 ou 7, dans lequel la sous-liaison est supprimée seulement si les informations de sous-liaison supplémentaires reçues (302) comprennent un identifiant qui permet de déterminer que la sous-liaison doit être supprimée.

8. Procédé selon la revendication 6, dans lequel les informations de sous-liaison supplémentaires reçues (302) spécifient l'identifiant de sous-liaison et l'identifiant de la liaison.

9. Procédé selon l'une quelconque des revendication 1 à 8, comprenant en outre les étapes consistant à recevoir des informations de sous-liaison supplémentaires (302) après qu'il est déterminé que la sous-liaison est au sein de la liaison, et à utiliser les informations de sous-liaison supplémentaires reçues (302) pour modifier la position de la sous-liaison déterminée au sein de la liaison.

10. Procédé selon la revendication 9, dans lequel les informations de sous-liaison supplémentaires reçues (302) comprennent au moins l'une parmi une localisation de début et une localisation de fin de la sous-liaison déterminée.

11. Procédé selon la revendication 9 ou 10, comprenant en outre l'étape consistant à utiliser les informations de sous-liaison supplémentaires reçues (302) pour prolonger ou raccourcir une longueur de la sous-liaison.

12. Procédé selon l'une quelconque des revendications 1 à 11, comprenant en outre les étapes consistant à recevoir des informations de sous-liaison supplémentaires après qu'il est déterminé que la sous-liaison est au sein de la liaison, et à utiliser les informations de sous-liaison supplémentaires reçues pour modifier la position de la sous-liaison déterminée au-delà de contraintes de localisation associées à la liaison.

13. Procédé selon l'une quelconque des revendications 1 à 12, comprenant en outre l'étape consistant à recevoir des informations correspondant à une structure de gestion de message comprenant des informations correspondant à un temps de génération des informations incluses dans la structure de gestion de message.

14. Procédé selon la revendication 13, dans lequel le temps de génération inclus au sein de la structure de gestion de message reçue est connexe à des informations de statut pour la sous-liaison.

15. Procédé selon la revendication 14, dans lequel le temps de génération inclus au sein de la structure de gestion de message reçue est connexe à une pluralité de structures de composant de message qui correspondent à plus d'un élément parmi une tendance de trafic prédite ou actuelle, une quantité de trafic prédite ou actuelle, une vitesse prédite ou actuelle, et un temps prédit ou actuel pour traverser une liaison particulière.

16. Procédé selon l'une quelconque des revendications 13 à 15, dans lequel l'étape consistant à recevoir des informations reflétant une structure de composant de message comprend l'étape consistant à recevoir des informations associées à une identification et une configuration de la sous-liaison.

17. Procédé selon l'une quelconque des revendications 1 à 16, comprenant en outre l'étape consistant à recevoir des informations de statut de trafic pour la sous-liaison comprenant des informations associées à au moins un élément parmi une vitesse de déplacement prédite ou actuelle sur la sous-liaison, un niveau ou une quantité de congestion prédit ou actuel sur la sous-liaison, un temps de déplacement prédit ou actuel pour traverser la sous-liaison, ou une vitesse prédite ou actuelle de déplacement sur la sous-liaison.

18. Procédé selon la revendication 17, dans lequel les informations de statut de trafic pour la sous-liaison diffèrent d'informations de statut de trafic pour la liaison.

19. Procédé selon la revendication 18, dans lequel les informations de statut de trafic pour la sous-liaison sont reçues après avoir reçu des informations de statut de trafic qui sont configurées pour révéler un statut pour la liaison, les informations de statut de sous-liaison étant configurées pour permettre des informations de statut mises à jour pour une partie de la liaison correspondant à la sous-liaison.

20. Procédé selon l'une quelconque des revendications 1 à 19, dans lequel l'étape consistant à recevoir des informations de sous-liaison comprend l'étape consistant à recevoir un descripteur de texte associé à la sous-liaison.

21. Appareil d'indentification d'informations de trafic, l'appareil comprenant :
des moyens (1) destinés à recevoir une trame de message comprenant :
- une séquence d'un ou plusieurs messages d'informations de trafic dans laquelle au moins un message d'informations de trafic comporte :
- une structure d'informations de localisation comportant un identifiant de sous-liaison permettant de déterminer si les informations de trafic reçues comprennent des informations de sous-liaison, des informations identifiant une liaison au sein de laquelle la sous-liaison est localisée, et des informations de localisation de sous-liaison permettant une détermination d'une partie de la liaison qui correspond à la sous-liaison; et
- des informations correspondant à un temps de déplacement pour la sous-liaison, et
- un premier identifiant de nombre (N) correspondant au nombre de messages d'informations de trafic,
des moyens destinés à déterminer, sur la base de l'identifiant de nombre, le nombre de messages d'informations de trafic dans la trame de message,
des moyens (3) destinés à déterminer, sur la base de l'identifiant de sous-liaison, si les informations de trafic reçues comprennent des informations de sous-liaison ou non ; et
des moyens (5) destinés à déterminer des caractéristiques de sous-liaison si l'identifiant de sous-liaison permet de déterminer que les informations de trafic reçues comprennent des informations de sous-liaison.

22. Appareil selon la revendication 21, comprenant en outre des moyens (1) destinés à recevoir des informations de statut de trafic permettant une détermination d'informations de trafic pour une sous-liaison, et dans lequel le fait de déterminer des caractéristiques de sous-liaison comprend les faits d'associer les informations de statut de trafic reçues en tant qu'informations de statut de trafic de sous-liaison pour la sous-liaison, et de permettre la perception d'une association entre la sous-liaison et la liaison, et une association entre les informations de statut de trafic reçues et la sous-liaison.

23. Appareil selon la revendication 21 ou 22, dans lequel les moyens (1) destinés à recevoir comprennent des moyens destinés à recevoir des informations de sous-liaison supplémentaires après qu'il est déterminé que la sous-liaison est au sein de la liaison, l'appareil comprenant en outre des moyens destinés à utiliser les informations de sous-liaison supplémentaires reçues pour modifier la position de la sous-liaison déterminée au sein de la liaison.

24. Appareil selon la revendication 23, comprenant en outre des moyens destinés à utiliser les informations de sous-liaison supplémentaires reçues pour prolonger ou raccourcir une longueur de la sous-liaison.

25. Appareil selon l'une quelconque des revendications 21 à 24, dans lequel les moyens (1) destinés à recevoir comprennent des moyens destinés à recevoir des informations de sous-liaison supplémentaires après qu'il est déterminé que la sous-liaison est au sein de la liaison, l'appareil comprenant en outre des moyens destinés à utiliser les informations de sous-liaison supplémentaires reçues pour modifier la position de la sous-liaison déterminée au-delà de contraintes de localisation associées à la liaison.
